Europäisches Patentamt

European Patent Office

Office européen des brevets

(11) Publication number: **0 625 927 B1**

# EUROPEAN PATENT SPECIFICATION

(45) Date of publication of patent specification: **23.08.95**    (51) Int. Cl.⁶: **B01J 20/12**, C11B 3/10

(21) Application number: **93903240.5**

(22) Date of filing: **04.02.93**

(86) International application number:
**PCT/GB93/00233**

(87) International publication number:
**WO 93/15832 (19.08.93 93/20)**

(54) **ADSORBENT MATERIAL AND THE USE THEREOF FOR THE CLARIFICATION OF AQUEOUS LIQUIDS.**

(30) Priority: **11.02.92 GB 9202825**

(43) Date of publication of application:
**30.11.94 Bulletin 94/48**

(45) Publication of the grant of the patent:
**23.08.95 Bulletin 95/34**

(84) Designated Contracting States:
**AT BE DE DK ES FR GB IT NL SE**

(56) References cited:
| | |
|---|---|
| EP-A- 0 228 305 | WO-A-92/15396 |
| FR-A- 2 075 578 | GB-A- 1 181 435 |
| US-A- 2 192 000 | US-A- 3 328 124 |

(73) Proprietor: **Laporte Industries Limited
3 Bedford Square
London WC1B 3RA (GB)**

(72) Inventor: **TAYLOR, Roger, Skelton
26 Bembridge Close
Upton Bridle Path
Widnes
Cheshire WA8 9AA (GB)**
Inventor: **CANDY, Thomas, Edward, Gerard
1 Pensarn Gardens
Callands
Warrington
Cheshire WA5 2RF (GB)**

(74) Representative: **Green, Mark Charles
Urquhart-Dykes & Lord,
91 Wimpole Street
London W1M 8AH (GB)**

Rank Xerox (UK) Business Services
(3.10/3.09/3.3.3)

EP 0 625 927 B1

## Description

This invention relates to a new or improved adsorbent material based on acid-treated three layer minerals and to the use of the adsorbent for the clarification of aqueous liquids. The term "adsorbent" is used without intention to limit to any particular mechanism by which materials may be taken into or onto a body of material.

Many weakly or moderately acidic aqueous liquids intended for consumption, for example beers, wines, beverages containing fruit extracts and the like are subject under certain conditions to a lack of optical clarity which can be a disincentive to a prospective purchaser. An example of this is the tendency for some beers to develop a haze comprising proteinaceous materials or complexes thereof with, for example, tannins after storage under relatively chilled conditions or when dispensed in the chilled state. Most beer production processes include a post-conditioning filtration stage intended to reduce the content of proteinaceous material in the final product and thereby reduce the tendency of the beer to develop chill-haze. The fact that the problem can persist indicates that this filtration step could well be improved. By moderately acidic liquid is meant a liquid having a pKa of at least about 3.

US-A-3,328,124 discloses the production of particulate materials by the acid-treatment under pressure of hydrous magnesium silicates. Such materials have pore dimensions of 22 to 45 Angstroms and this gives a distinctive selective power of sorption.

GB-B-1,181,435 discloses the production of adsorbents for treating fermented or fermentable liquors by the acid treatment of a montmorillonite at high pressure and temperature to give a content of $SiO_2$ of 80 to 90%. There is no disclosure of the pore diameter of the adsorbents.

United States Patent Specification No. 3901826 discloses an adsorbent intended for the treatment of weakly acidic aqueous solutions comprising a montmorillonite mineral which has been treated with a mineral acid, followed by washing, until its $SiO_2$ content has reached at least 80% by weight and until its crystal lattice has become X-ray amorphous. This product is to be used to treat aqueous acidic liquids without contaminating the liquids appreciably with iron or aluminium ions and is disclosed to have a stabilising effect against protein.

According to the present invention there is provided an adsorbent suitable for the treatment of weakly or moderately acidic aqueous liquids such as beers, wines, fruit extracts or beverages containing fruit extracts to reduce their content of protein and/or their tendency to chill haze and/or to improve their optical clarity.

The present invention provides an adsorbent material comprising an acid-treated three layer mineral having a silica content, expressed as $SiO_2$, of at least 90%, preferably of at least 95%, by dry weight and an average pore diameter greater than 50 Angstroms, preferably of at least 60 Angstroms or more.

The average pore diameter of an acid treated mineral is defined as

$$4 \times \frac{V_{DES}}{A_{DES}}$$

where $V_{DES}$ and $A_{DES}$ are the "cumulated pore volume" and "cumulated surface area" calculated from the desorption branch of the isotherm. The calculation uses standard equations and parameters (Technical Reference manual, ASAP 2400, operating programme V1.03, 18th January 1991, Micromeritics Corporation). The surface area of the adsorbent provided by the invention is preferably from 200 to 400 $m^2$/g.

The mineral which is to be treated to provide the adsorbent material of the invention is preferably a smectite clay mineral, for example a saponite, a hectorite, a beidellite or, preferably, a montmorillonite. Alkaline earth montmorillonites are particularly suitable. The term "three layer mineral is used to include synthetic three layer materials having structures similar to, or analogous to, naturally occuring minerals.

The acid treatment of the mineral to produce the adsorbent of the invention is an important factor in the practice of this invention. To produce the required pore size for the adsorption of protein molecules various parameters appertaining to the acid-treatment process are preferably selected as described hereafter.

The mineral to be acid-treated may contain some moisture which may typically be from about 5% to about 80% by weight. This mineral is preferably contacted with a strong acid, having a pKa value below 3 for example a mineral acid such as sulphuric, nitric or hydrochloric acid. The concentration of the acid as added to the mineral may be at least 30% by weight and is preferably concentrated acid for example from 85% to 98% by weight sulphuric acid or other mineral acid. The acid:mineral ratio, calculated on the weight of 100% acid and the dry weight of the mineral, is preferably at least 1:1 for example very suitably from 1 to 2.0:1.

The duration of acid treatment of the mineral and the temperature, pressure and the like employed are preferably controlled to attain the desired silica content while avoiding the complete disintegration of the mineral i.e. the acid treatment to be discontinued before all of the octahedral structural atoms have been removed from the mineral as evidenced, in the case of the montmorillonites for example, by the retention of some bound, e.g. non-water leachable, aluminium. Preferably the content of non-leachable aluminium in the acid-treated mineral is at least 0.05% particularly preferably at least 0.1% and up to 1% or 2% more by dry weight calculated as $Al_2O_3$. The content of non-water leachable aluminium may be determined by washing the acid-treated mineral to remove soluble aluminium salts and analysing the remaining material for aluminium. It is also possible to check for octahedral aluminium, where appropriate, by known analytical techniques. Preferably the duration of the acid treatment is above 4 hours, for example very suitably, from 10 hours to 24 hours if atmospheric pressure is used. Preferably the temperature of treatment is from 60°C to 100°C. When the desired degree of acid treatment has been effected the reaction mixture is preferably quenched with cold water, filtered, and the acid-treated mineral recovered, washed with water or, preferably, dilute acid, which may be, for example, a 0.02 to 0.5% wt solution of mineral acid preferably washed again and, if desired, dried e.g. to a moisture content below about 7.5%, for example from 1% to 6%, and milled e.g. to a particle size of not more than about 15 microns for example from about 5 to about 15 microns. Alternatively the acid-treated mineral may be used after suitable washing but without drying and/or milling or other particle size control procedure. Preferably the acid treatment conditions are controlled to achieve an adsorbent containing from about 95% to about 99.5% by dry weight of silica, calculated as $SiO_2$, and an average pore diameter from about 60 Angstroms to about 100 Angstroms.

The degree of washing and the wash solution compositions may be controlled to leave some residual acidity on the product. This preferably corresponds to a Hedley acidity below 5% for example from 0.01% to 4%. Too high a residual acidity may imply too high a residual acidic salt content for a product intended for beverage treatment. Nevertheless a small degree of residual acidity is preferred for example from 0.02% to less than 0.5% Hedley.

The adsorbent material produced as above described may be used to treat beverages or other suitable liquids either by passing the liquid through a fixed bed of the adsorbent e.g. on a filter or through a bed of adsorbent which may have been placed into a physical form suitable for this e.g. by granulation, or by mixing the adsorbent into a body of the liquid followed by filtration, decantation or other suitable means of separation. The dose of the adsorbent material is preferably from 5 to 1000 g/hectalitre of the liquid to be treated particularly preferably from 20 to 200 g/hl thereof. A suitable duration of contact may be from 30 seconds to 3 weeks depending on the brewing process or the nature of the liquid being treated.

The effectiveness of the adsorbent according to this invention in removing protein from a beer was tested by the saturated ammonium sulphate precipitation limit (SASPL) test of the chill haze stability of the beer. The stepwise addition of the saturated ammonium sulphate to a sample of beer causes an increase in haze which starts to occur fairly suddenly at a certain level of addition and thereafter proceeds rapidly. The volume of saturated ammonium sulphate corresponding to this haze inflection point is used as an indication of the stability of the beer and is denoted hereafter as the "SASPL" value. The higher the SASPL value the more stable the beer.

An adsorbent according to this invention was made by the following procedure. A calcium montmorillonite from Los Trancos, Spain was treated with 98% sulphuric acid at an acid:clay ratio of 1.25:1 for 16 hours at 95°C with a final reactor slurry of 20% wt solid concentration. The reaction mixture was quenched by the addition of cold water filtered and the filter cake washed with water to a residual acidity of 3.59% Hedley, oven dried to 5.7% moisture and milled to a particle size of 10.8 microns. The product had an average pore size of 82 Angstroms, a surface area of 302 $m^2$/g and contained 96.66% $SiO_2$ and 1.24% $Al_2O_3$. The adsorbent gave a SASPL value of 3.13.

In two series of tests series of products made according to the invention and having differing average pore diameters or silica contents were used to treat beer by the test described above. The resistance of the treated beers to chill haze are depicted in the graphs of Figure I and Figure II attached hereto which show the importance of these parameters in protein removal. As may be seen from these Figures the adsorbent material according to the invention may provide a SASPL value of at least 2.5.

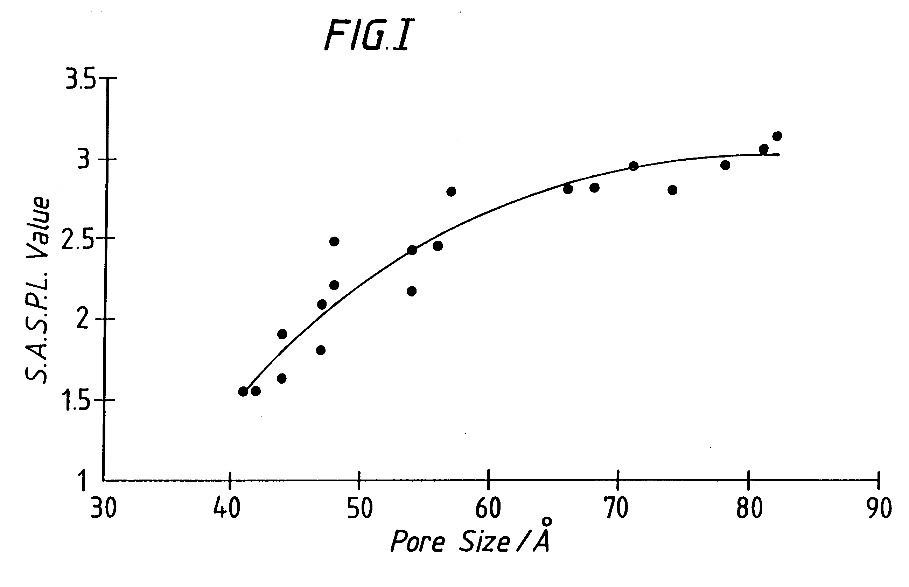

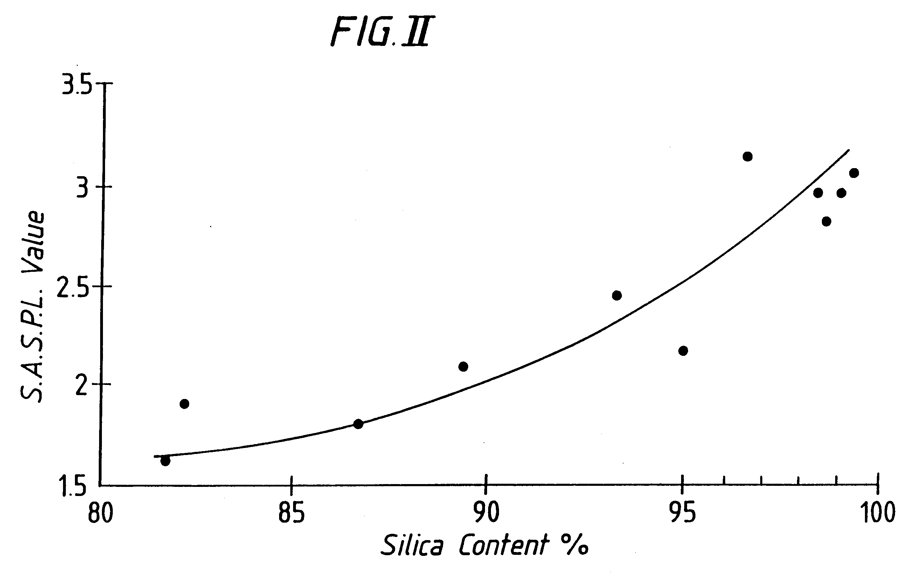

**Claims**

1. An adsorbent material comprising an acid-treated three layer mineral having a silica content, expressed as $SiO_2$, of at least 90% by dry weight and an average pore diameter greater than 50 Angstroms.

2. An adsorbent material as claimed in claim 1 comprising an acid-treated montmorillonite and having a non-water leachable content of aluminium, expressed as $Al_2O_3$, of at least 0.05% by dry weight.

3.  An adsorbent material as claimed in claim 1 or 2 having a Hedley acidity of from 0.01% to 4%.

4.  An adsorbent material as claimed in any preceding claim having a silica content, expressed as SiO2, of from 90% to 99.5% by dry weight.

5.  An adsorbent material as claimed in any one of claims 1 to 4 wherein the acid-treated mineral has a silica content of at least 95% by dry weight.

6.  An adsorbent material as claimed in any one of claims 1 to 5 having a content of non-water leachable aluminium, expressed as $Al_2O_3$, of at least 0.1% by dry weight.

7.  An adsorbent material as claimed in any one of claims 1 to 6 having an average pore diameter of from 60 to 100 Angstroms.

8.  A process for the improvement of optical clarity in aqueous liquids comprising treating an aqueous liquid with an adsorbent material as claimed in any one of Claims 1 to 7.

9.  A process as claimed in claim 8 wherein the liquid is contacted with from 5 to 1000 g per hectalitre of liquid of the adsorbent for a duration of from 30 minutes to 3 weeks thereby to increase the SASPL value attributable to the liquid to at least 2.5.

10. A process as claimed in any one of claims 8 or 9 wherein the liquid is a beer, a wine or a fruit extract-containing beverage.

**Patentansprüche**

1.  Ein Adsorptionsmittel umfassend ein säurebehandeltes Dreischichtenmineral mit einem Kieselsäure-Gehalt, ausgedrückt als $SiO_2$, von wenigstens 90% Trockengewicht und einem durchschnittlichen Porendurchmesser größer als 50 Angström.

2.  Ein Adsorptionsmittel nach Anspruch 1, umfassend säurebehandelten Montmorillonit und enthaltend einen nicht wasserauswaschbaren Gehalt an Aluminium, ausgedrückt als $Al_2O_3$, von wenigstens 0,05% Trockengewicht.

3.  Ein Adsorptionsmittel nach Anspruch 1 oder 2, mit einer Hedley-Azidität von 0,01% bis 4%.

4.  Ein Adsorptionsmittel nach einem der vorangegangenen Ansprüche, enthaltend einen Kieselsäure-Gehalt, ausgedrückt als $SiO_2$, von 90% bis 99,5% Trockengewicht.

5.  Ein Adsorptionsmittel nach einem der Ansprüche 1 bis 4, worin das säurebehandelte Mineral einen Kieselsäure-Gehalt von wenigstens 95% Trockengewicht hat.

6.  Ein Adsorptionsmittel nach einem der Ansprüche 1 bis 5, enthaltend einen Gehalt von nicht wasserauswaschbarem Aluminium, ausgedrückt als $Al_2O_3$, von wenigstens 0,1% Trockengewicht.

7.  Ein Adsorptionsmittel nach einem der Ansprüche 1 bis 6, mit einem durchschnittlichen Porendurchmesser von 60 bis 100 Angström.

8.  Ein Verfahren zur Verbesserung der optischen Reinheit von wässrigen Flüssigkeiten umfassend die Behandlung einer wässrigen Flüssigkeit mit einem Adsorptionsmittel nach einem der Ansprüche 1 bis 7.

9.  Ein Verfahren nach Anspruch 8, worin die Flüssigkeit mit 5 bis 1000 g Adsorptionsmittel pro Hektoliter Flüssigkeit über eine Dauer von 30 Minuten bis 3 Wochen in Kontakt gebracht wird, um damit den der Flüssigkeit zugeordneten SASPL-Wert auf wenigstens 2,5 anzuheben.

10. Ein Verfahren nach einem der Ansprüche 8 oder 9, worin die Flüssigkeit ein Bier, ein Wein oder ein Fruchtextrakt enthaltendes Getränk ist.

**Revendications**

1.  Matériau adsorbant comprenant un minéral à trois couches, traité à l'acide, présentant une teneur en silice, exprimée en $SiO_2$, d'au moins 90 % en poids à sec, et un diamètre de pores moyen supérieur à 50 Angströms.

2.  Matériau adsorbant selon la revendication 1, comprenant une montmorillonite traitée à l'acide et présentant une teneur en aluminium non lavable à l'eau, exprimée en $Al_2O_3$, d'au moins 0,05 % en poids à sec.

3.  Matériau adsorbant selon la revendication 1 ou 2, présentant une acidité Hedley de 0,01 % à 4 %.

4. Matériau adsorbant selon l'une quelconque des revendications précédentes, présentant une teneur en silice, exprimée en $SiO_2$, de 90 % à 99, 5 % en poids à sec.

5. Matériau adsorbant selon l'une quelconque des revendications 1 à 4, dans lequel le minéral traité à l'acide présente une teneur en silice d'au moins 95 % en poids à sec.

6. Matériau adsorbant selon l'une quelconque des revendications 1 à 5, présentant une teneur en aluminium non lavable à l'eau, exprimée en $Al_2O_3$, d'au moins 0,1 % en poids à sec.

7. Matériau adsorbant selon l'une quelconque des revendications 1 à 6, présentant un diamètre de pores moyen de 60 à 100 Angströms.

8. Procédé pour l'amélioration de la clarté optique de liquides aqueux, comprenant le traitement d'un liquide aqueux par un matériau adsorbant selon l'une quelconque des revendications 1 à 7.

9. Procédé selon la revendication 8, dans lequel le liquide est amené en contact avec de 5 à 1000 g/hectolitre de l'adsorbant liquide pendant une durée comprise entre 30 minutes et 3 semaines, pour augmenter ainsi jusqu'à au moins 2,5 la valeur de SASPL attribuable au liquide.

10. Procédé selon l'une quelconque des revendications 8 ou 9, dans lequel le liquide est une bière, un vin ou une boisson contenant un extrait de fruit.

FIG.I

FIG.II